# EUROPEAN PATENT APPLICATION

(11) **EP 4 843 757 A1**
(43) Date of publication of application: **25.11.2026**
(21) Application number: 25851724.2
(22) Date of filing: 07.07.2025
(51) Int. Cl.: B29C 65/32, H05B 6/36, B29C 65/00, B29D 99/00, H01M 50/103, H01M 50/105, H01M 50/183, B29L 31/00

(54) **BATTERY SEALING DEVICE AND BATTERY MANUFACTURING SYSTEM**

(30) Priority: 06.08.2024 KR 20240104718
(71) Applicant: LG Energy Solution, Ltd., Seoul 07335 (KR)
(72) Inventor: KWON, Gi-Hwan, Daejeon 34122 (KR); HA, Dong-Kyun, Daejeon 34122 (KR)
(74) Representative: Goddar, Heinz J.
(86) International application number: PCT/KR2025/009749
(87) International publication number: WO 2026/034816

(57) **Abstract**

A battery sealing apparatus according to one aspect of the present disclosure includes a magnetic core configured to generate a closed-loop magnetic field penetrating the target portion of a battery; an induction coil wound around the magnetic core; and a pressure pad having elasticity, disposed between the magnetic core and the target portion, and configured to press the target portion.

## Description

### TECHNICAL FIELD

This application is based on and claims priority from Korean Patent Application No. 10-2024-0104718, filed on August 6, 2024, with the Korean Intellectual Property Office, the disclosure of which is incorporated herein in its entirety by reference.

The present disclosure relates to a battery sealing apparatus and a battery manufacturing system, and more specifically, to a battery sealing apparatus configured to seal a battery using an induction heating method, and a battery manufacturing system including such a battery sealing apparatus.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like.

Recently, as such a secondary battery has been applied not only to small devices such as mobile phones, tablet PCs, and laptops, but also to larger devices requiring high output voltage and large charging capacities such as electric vehicles and energy storage systems (ESSs), there is a growing interest in and demand for battery manufacturing technologies capable of improving battery yield while increasing battery production rates and ensuring the intended performance and safety of the battery.

Meanwhile, batteries are manufactured through a series of processes that place an electrode assembly including a current collector and an electrolyte material in a case, and then seal the case by pressing and/or heating. Therefore, the sealing quality of the battery is a critical factor in determining the yield, performance, and safety of the battery.

However, the existing technology of sealing batteries using a bar-shaped sealing tool heated by a heater has a problem of low battery production rates because the heating and cooling time for the sealing tool is long, and prolonged use of the sealing tool is difficult due to overheating issues.

Additionally, the existing technology has a problem in that when the sealing target portion of the battery has a step or bend, if the corresponding battery is not set accurately in the designated position, the contact between the entire sealing target portion and the sealing tool becomes uneven, resulting in sealing defects, which consequently reduces the yield of the battery and does not ensure the performance and safety of the battery.

### DISCLOSURE

### Technical Problem

The present disclosure is designed to solve the problems of the related art, and therefore the present disclosure is directed to providing a battery sealing apparatus capable of improving the yield of battery while increasing battery production rates and ensuring the intended performance and safety of the battery, and a battery manufacturing system including such a battery sealing apparatus.

### Technical Solution

A battery sealing apparatus according to one aspect of the present disclosure is an apparatus configured to seal a target portion of a battery corresponding to a sealing target using an induction heating method while pressing the target portion, and includes a magnetic core configured to generate a closed-loop magnetic field penetrating the target portion; an induction coil wound around the magnetic core; and a pressure pad having elasticity, disposed between the magnetic core and the target portion, and configured to press the target portion.

In an embodiment, the magnetic core may include a main magnetic core configured to generate a first magnetic field having a predetermined magnetic flux density; and at least one sub-magnetic core disposed adjacent to the main magnetic core and configured to generate a second magnetic field having a lower magnetic flux density than the first magnetic field.

In an embodiment, the main magnetic core may include a plurality of first metal plates stacked in parallel with each other, the at least one sub-magnetic core may include a plurality of second metal plates stacked in parallel with each other, and the thickness of each of the plurality of first metal plates may be configured to be thinner than the thickness of each of the plurality of second metal plates.

In an embodiment, the target portion may include a first portion having a relatively long magnetic field penetration distance and a second portion having a relatively short magnetic field penetration distance, the main magnetic core may be disposed at a position corresponding to the first portion, and the at least one sub-magnetic core may be disposed at a position corresponding to the second portion.

In an embodiment, the main magnetic core and the at least one sub-magnetic core may each have a partially disconnected loop shape, and the main magnetic core may be configured to protrude further in a predetermined direction than the at least one sub-magnetic core.

In an embodiment, the induction coil may include a first induction coil commonly wound around the main magnetic core and the at least one sub-magnetic core; and a second induction coil wound only around the main magnetic core.

In an embodiment, the amplitude of a second alternating current flowing through the second induction coil may be greater than the amplitude of a first alternating current flowing through the first induction coil.

In an embodiment, the frequency of the second alternating current may be lower than the frequency of the first alternating current.

In an embodiment, the induction coil may have a tubular shape with a hollow interior.

In an embodiment, the induction coil may include an inlet for introducing a cooling material into the induction coil; and an outlet for discharging the cooling material introduced into the induction coil to the outside of the induction coil.

In an embodiment, the battery sealing apparatus may further include an insulating block having insulating properties and surrounding the exterior of the magnetic core and the induction coil.

In an embodiment, the pressure pad may be disposed on the outer surface of the insulating block.

In an embodiment, the pressure pad may be made of a material including silicone.

A battery manufacturing system according to another aspect of the present disclosure includes the battery sealing apparatus described above.

### Advantageous Effects

According to the present disclosure, the battery sealing apparatus may be configured to seal by directly heating the target portion of the battery corresponding to the sealing target using the induction heating method while pressing the target portion, thereby reducing the time and power required for heating and cooling the existing sealing tool, enabling prolonged use of the battery sealing apparatus, and improving battery production rates.

Additionally, the elastic pressure pad is disposed between the magnetic core generating the magnetic field and the target portion of the battery to press the target portion, and thus, even if the target portion of the battery has a step or bend, or the corresponding battery is not set accurately in the designated position, the entire target portion may be appropriately pressed to prevent sealing defects, which may result in improving the yield of the battery and ensuring the performance and safety of the battery.

Additionally, the magnetic core generating the magnetic field may include a main magnetic core configured to generate a magnetic field with a relatively high magnetic flux density and at least one sub-magnetic core configured to generate a magnetic field with a relatively low magnetic flux density, thereby enabling uniform sealing even if the target portion of the battery includes relatively thick and relatively thin parts, and further improving the sealing quality of the battery.

Additionally, since the induction coil wound around the magnetic core has a tubular shape with a hollow interior, a cooling material may be supplied into the induction coil to efficiently cool the induction coil and the magnetic core, which may result in further extending the continuous usage time of the battery sealing apparatus.

Additionally, since the pressure pad is made of a material including silicone with insulating properties, heat loss occurring at the target portion may be prevented, and the power required for the sealing process may be reduced.

Furthermore, those having ordinary skill in the art to which the present disclosure pertains will clearly understand from the following description that various embodiments according to the present disclosure may provide various technical advantages not mentioned above.

### DESCRIPTION OF DRAWINGS

FIG. 1 is a perspective view showing a battery sealing apparatus according to an embodiment of the present disclosure.
FIG. 2 is an exploded perspective view showing an example of a battery requiring a sealing process.
FIG. 3 is a perspective view showing an example of an assembled battery.
FIG. 4 is a front view of the battery illustrated in FIG. 3.
FIG. 5 is a perspective view showing an induction heating module of a battery sealing apparatus according to an embodiment of the present disclosure.
FIG. 6 is a side view of the induction heating module illustrated in FIG. 5.
FIG. 7 is a perspective view showing an example of a main magnetic core applicable to the present disclosure.
FIG. 8 is a side view of the main magnetic core illustrated in FIG. 7.
FIG. 9 is a perspective view showing an example of a sub-magnetic core applicable to the present disclosure.
FIG. 10 is a side view of the sub-magnetic core illustrated in FIG. 9.
FIG. 11 is a view showing an example of a first induction coil applicable to the present disclosure.
FIG. 12 is a view showing an example of a second induction coil applicable to the present disclosure.
FIG. 13 is a perspective view showing an induction heating module according to a modified embodiment.
FIG. 14 is a side view showing the main magnetic core of the induction heating module illustrated in FIG. 13.
FIG. 15 is a block diagram showing a battery manufacturing system according to an embodiment of the present disclosure.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted. Additionally, the terms used in this specification are terms defined in consideration of functions in the present disclosure, which may vary depending on the intention or custom of the designer, manufacturer, and the like. Therefore, definitions of terms to be described below should be made based on the content throughout this specification.

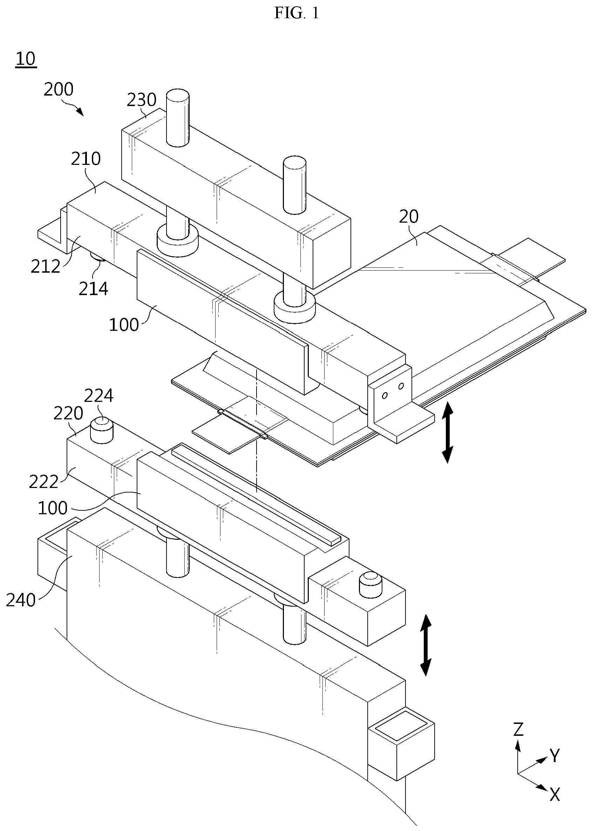

FIG. 1 is a perspective view showing a battery sealing apparatus according to an embodiment of the present disclosure.

As illustrated in FIG. 1, a battery sealing apparatus 10 according to an embodiment of the present disclosure is configured to seal a target portion of a battery 20 corresponding to a sealing target using an induction heating method while pressing the target portion. For example, the target portion of the battery 20 corresponding to the sealing target may be an edge portion of a case forming the body of the battery 20.

To this end, the battery sealing apparatus 10 includes an induction heating module 100. As will be described again below, the induction heating module 100 may generate an electric field penetrating the target portion of the battery 20, thereby generating an induced current in the target portion.

In an embodiment, the battery sealing apparatus 10 may include an automated jig 200 configured to support an induction heating module 100 and move it to the target portion of the battery 20, thereby bringing the induction heating module 100 into contact with the target portion.

For example, the induction heating module 100 may include an upper module and a lower module that contact the target portion of the battery 20 from opposite sides with the target portion interposed therebetween, thereby generating an electric field penetrating the target portion. In this case, the automated jig 200 may include a first support 210 and a second support 220 that are coupled to the induction heating module 100 and support the induction heating module 100.

The first support 210 may include a first mounting frame 212 on which the upper module of the induction heating module 100 is mounted, and a first stopper 214 that limits the movement range of the first mounting frame 212.

Additionally, the second support 220 may include a second mounting frame 222 on which the lower module of the induction heating module 100 is mounted, and a second stopper 224 that limits the movement range of the second mounting frame 222.

Additionally, the automated jig 200 may include a first actuator 230 configured to raise or lower the first support 210. According to an embodiment, the automated jig 200 may include a second actuator 240 configured to raise or lower the second support 220.

For example, when the battery 20 to be sealed arrives at a predetermined position, the first actuator 230 lowers the first support 210 to bring the upper module of the induction heating module 100 mounted on the first support 210 into close contact with the upper surface of the target portion of the battery 20, and the second actuator 240 raises the second support 220 to bring the lower module of the induction heating module 100 mounted on the second support 220 into close contact with the lower surface of the target portion. Then, the upper module and the lower module of the induction heating module 100 may seal the target portion of the battery 20 by heating using the induction heating method while pressing the target portion.

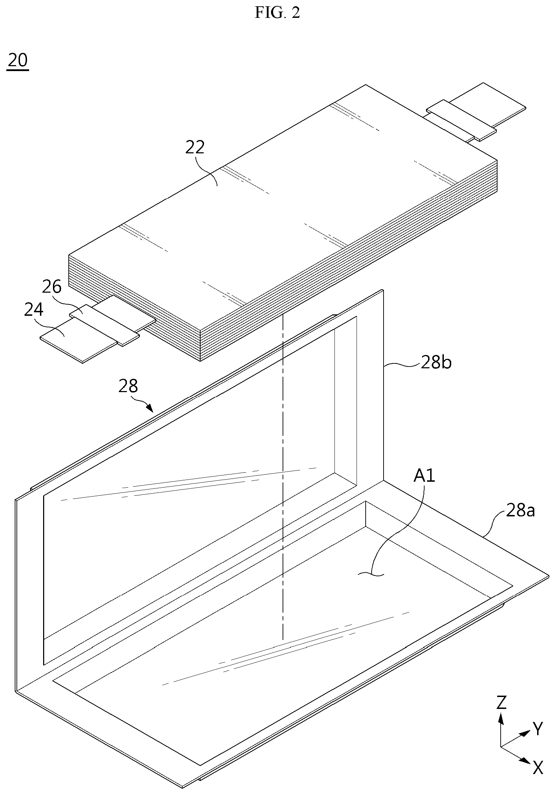

FIG. 2 is an exploded perspective view showing an example of a battery requiring a sealing process.

As illustrated in FIG. 2, in general, the battery 20 may include an electrode assembly 22 provided by stacking a positive electrode plate and a negative electrode plate with a separator therebetween, and a case 28 accommodating this electrode assembly 22 together with an electrolyte material in an internal space A1.

Additionally, the battery 20 may further include an electrode lead 24 electrically connected to the electrode assembly 22, and a sealing tape 26 sealing the perimeter of the electrode lead 24.

The case 28 of this battery 20 may include a first case portion 28a and a second case portion 28b coupled to each other to form an internal space A1. While the electrode assembly 22 and the electrolyte material are accommodated in the internal space A1 formed between the first case portion 28a and the second case portion 28b, the edge portion of the first case portion 28a and the corresponding edge portion of the second case portion 28b are hermetically coupled to each other, thereby completing the sealing of the battery 20.

To this end, the case 28 of the battery 20 may have a multilayer structure. For example, the first case portion 28a of the case 28 may include an aluminum sheet providing the rigidity required for protecting the electrode assembly 22, an insulating material layer laminated on the outer surface of the aluminum sheet to insulate the aluminum sheet, and a bonding material layer laminated on the inner surface of the aluminum sheet to be coupled to the second case portion 28b.

For example, the insulating material layer may include an insulating material such as polyethylene terephthalate (PET) or nylon. Additionally, the bonding material layer may include a heat-sealable material such as casted polypropylene (CPP) or polypropylene (PP).

Meanwhile, the second case portion 28b of the case 28 may also have a multilayer structure identical to or similar to the first case portion 28a described above.

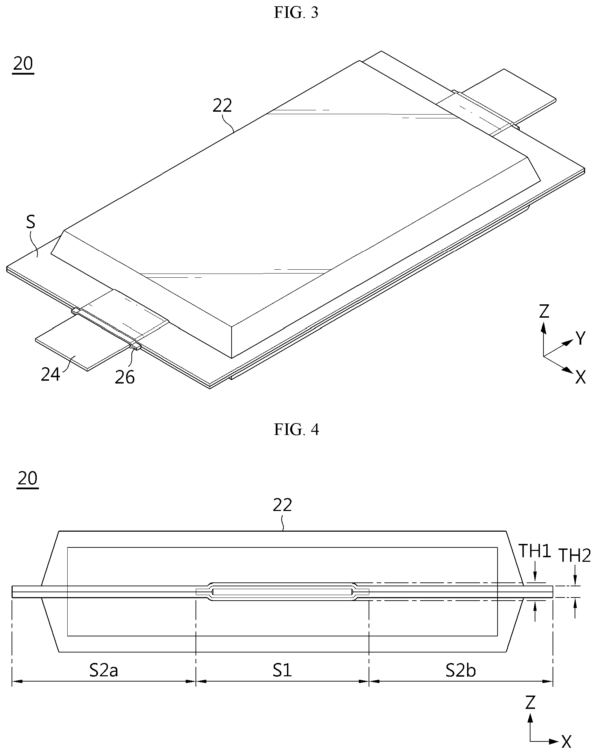

FIG. 3 illustrates that the battery 20 requiring the sealing process is a pouch-type battery or a prismatic battery, but the shape or type of the battery that can be sealed by applying the present disclosure may be variously changed depending on embodiments.

FIG. 3 is a perspective view showing an example of an assembled battery.

As illustrated in FIG. 3, the target portion S of the assembled battery 20 corresponding to a sealing target is the edge portion of the case 22 forming the outer body of the battery 20. This target portion S may be divided into a first portion where the electrode lead 24 and the sealing tape 26 are interposed between aluminum sheets forming the case 22, and a second portion where only the aluminum sheets are overlapped.

FIG. 4 is a front view of the battery illustrated in FIG. 3.

As illustrated in FIG. 4, the thickness TH1 of the first portion S1 where the electrode lead 24 and the sealing tape 26 are interposed between aluminum sheets among the target portion S of the battery 20, is thicker than the thickness TH2 of the second portions S2a, S2b where only the aluminum sheets are overlapped. That is, a step occurs between the first portion S1 and the second portions S2a, S2b.

Therefore, it is not possible to simultaneously seal the first portion S1 and the second portions S2a, S2b using a simple bar-shaped or flat plate-shaped sealing tool. Additionally, when simultaneously sealing the first portion S1 and the second portions S2a, S2b using a sealing tool having a concave groove corresponding to the first portion S1, if the battery 20 is not set accurately at a designated position, the contact between the sealing target portions S1, S2a, S2b of the battery 20 and the sealing tool becomes uneven, resulting in sealing defects, which consequently reduces the yield of the battery and does not ensure the performance and safety of the battery.

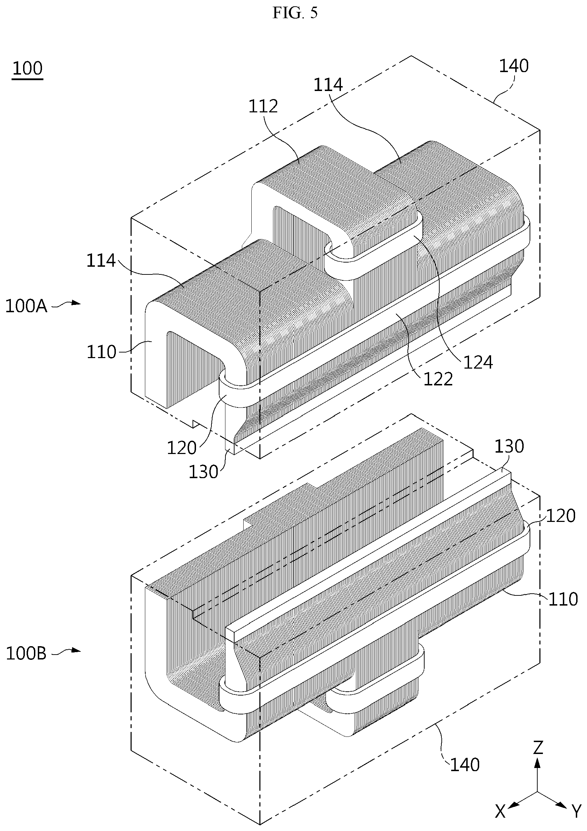

FIG. 5 is a perspective view showing an induction heating module of a battery sealing apparatus according to an embodiment of the present disclosure.

As illustrated in FIG. 5, the induction heating module 100 of the battery sealing apparatus according to an embodiment of the present disclosure includes a magnetic core 110, an induction coil 120, and a pressure pad 130.

In an embodiment, the induction heating module 100 may include an upper module 100A and a lower module 100B. In this case, the upper module 100A and the lower module 100B may each include a magnetic core 110, an induction coil 120, and a pressure pad 130.

The magnetic core 110 is configured to generate a closed-loop magnetic field penetrating the target portion of the battery corresponding to the sealing target. This magnetic core 110 may be manufactured by stacking a plurality of metal plates having the same shape. In this case, the plurality of metal plates may be made of various materials. For example, the plurality of metal plates may each be implemented as a silicon steel plate. Additionally, an insulating layer may be interposed between the metal plates.

In this way, since the magnetic core 110 has a stacked structure, it is possible to reduce the eddy current generated within the magnetic core, thereby reducing the power consumed by the battery sealing apparatus 10.

The induction coil 120 has conductivity and is wound around the magnetic core 110. When an alternating current flows through this induction coil 120, the direction of the magnetic field generated along the magnetic core 110 changes moment by moment, and this magnetic field generates an induced current in the target portion of the battery, thereby directly heating the target portion.

The pressure pad 130 has elastic and is disposed between the magnetic core 110 and the target portion of the battery to press to the target portion. For example, the pressure pad 130 may be made of a material including silicone.

In this way, the elastic pressure pad 130 is disposed between the magnetic core 110 generating a magnetic field and the target portion of the battery to press the target portion, and thus, even if the target portion of the battery has a step or bend, or the corresponding battery is not set accurately in the designated position, the entire target portion may be appropriately pressed to prevent sealing defects, which may result in improving the yield of the battery and ensuring the performance and safety of the battery.

Additionally, since the pressure pad 130 is made of a material including insulating silicon, heat loss generated in the target portion may be prevented, and the power required for the sealing process may be reduced.

In an embodiment, the magnetic core 110 may include a main magnetic core 112 and at least one sub-magnetic core 114.

The main magnetic core 112 may be configured to generate a first magnetic field having a predetermined magnetic flux density. In this case, the main magnetic core 112 may be configured to generate a first magnetic field having a relatively higher magnetic flux density compared to the at least one sub-magnetic core 114.

Additionally, the sub-magnetic core 114 may be disposed adjacent to the main magnetic core 112 and configured to generate a second magnetic field having a lower magnetic flux density than the first magnetic field generated by the main magnetic core 112.

The magnetic flux density of each of the first magnetic field and the second magnetic field may be determined in consideration of the materials and thicknesses of the case portion, electrode lead, sealing tape, and the like positioned at the target portion of the battery, which is the sealing target portion.

For example, the main magnetic core 112 may include a plurality of first metal plates stacked in parallel with each other, and the sub-magnetic core 114 may include a plurality of second metal plates stacked in parallel with each other. And, the thickness of each of the plurality of first metal plates may be configured to be thinner than the thickness of each of the plurality of second metal plates.

As previously mentioned, the target portion of the battery corresponding to the sealing target may be divided into a relatively thick first portion (e.g., S1 of FIG. 4) and a relatively thin second portion (e.g., S2a and S2b of FIG. 4).

In this case, the main magnetic core 112 may be disposed at a position corresponding to the first portion having a relatively long magnetic field penetration distance, and the sub-magnetic core 114 may be disposed at a position corresponding to the second portion having a relatively short magnetic field penetration distance.

In an embodiment, the main magnetic core 112 and the sub-magnetic core 114 may each have a partially disconnected loop shape. For example, as illustrated in FIG. 5, the cross-sections of the main magnetic core 112 and the sub-magnetic core 114 parallel to the YZ plane may have an 'n' shape or a 'U' shape, respectively.

In this case, the main magnetic core 112 may be configured to protrude further in the Z-axis direction than the sub-magnetic core 114, so that a portion of the hollow space surrounded by the main magnetic core 112 is positioned outside the outer surface of the sub-magnetic core 114 based on the Z-axis direction.

In an embodiment, the induction coil 120 may include a first induction coil 122 and a second induction coil 124. The first induction coil 122 may be configured to be commonly wound around the main magnetic core 112 and the at least one sub-magnetic core 114. The second induction coil 124 may be configured to be wound only around the main magnetic core 112. In this way, since the main magnetic core 112 generates a magnetic field using the plurality of induction coils 122, 124 wound at different positions, it may generate a magnetic field having a higher magnetic flux density than the magnetic field generated by the sub-magnetic core 114.

In an embodiment, the amplitude of the second alternating current flowing through the second induction coil 124 may be greater than the amplitude of the first alternating current flowing through the first induction coil 122. Accordingly, the main magnetic core 112 may easily generate a magnetic field having a higher magnetic flux density than the magnetic field generated by the sub-magnetic core 114.

In an embodiment, the frequency of the second alternating current flowing through the second induction coil 124 may be lower than the frequency of the first alternating current flowing through the first induction coil 122. Accordingly, while the destructive interference between the magnetic fields generated by the first induction coil 122 and the second induction coil 124 is reduced, the magnetic field generated by the main magnetic core 112 may have a greater penetration force than the magnetic field generated by the sub-magnetic core 114.

In an embodiment, the induction heating module 100 of the battery sealing apparatus 10 may further include an insulating block 140 having insulating properties and surrounding the exterior of the magnetic core 110 and the induction coil 120. For example, the insulating block 140 may be a cast body formed through an insert molding process.

In this case, the pressure pad 130 may be disposed on the outer surface of the insulating block 140.

In this way, the insulating block 140 is configured to supplement the mechanical rigidity of the magnetic core 110 and the induction coil 120 while protecting the magnetic core 110 and the induction coil 120, thereby improving the electrical safety of the battery sealing apparatus 10, and also manufacturing the magnetic core 110 and the induction coil 120 even using a material with relatively low rigidity. Additionally, since the magnetic core 110, the induction coil 120, and the pressure pad 130 are integrated by the insulating block 140, the magnetic core 110, the induction coil 120, and the pressure pad 130 may be easily mounted on the automated jig 200 described above.

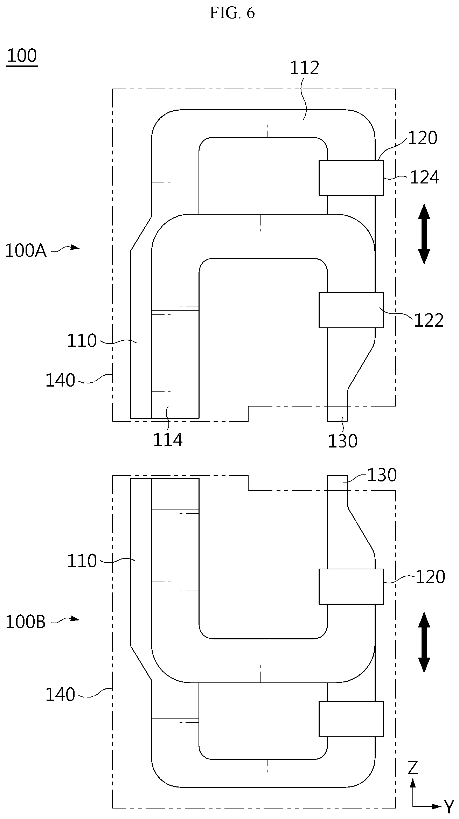

FIG. 6 is a side view of the induction heating module 100 illustrated in FIG. 5.

As illustrated in FIG. 6, the upper module 100A and the lower module 100B of the induction heating module 100 may each include the magnetic core 110, the induction coil 120, the pressure pad 130, and the insulating block 140 described above.

When a battery is placed at a predetermined position between the upper module 100A and the lower module 100B, the upper module 100A may press the target portion of the battery downward, and the lower module 100B may press the target portion of the battery upward. As described above, the component of the induction heating module 100 that contacts and presses the target portion of the battery is the pressure pad 130.

In this way, the induction heating module 100 may generate a closed-loop magnetic field penetrating the target portion by supplying an alternating current to the induction coil 120 while pressing the target portion of the battery. This magnetic field generates an induced current in the target portion to cause the temperature of the target portion to rise, and as a result, the target portion is thermally fused, thereby achieving sealing.

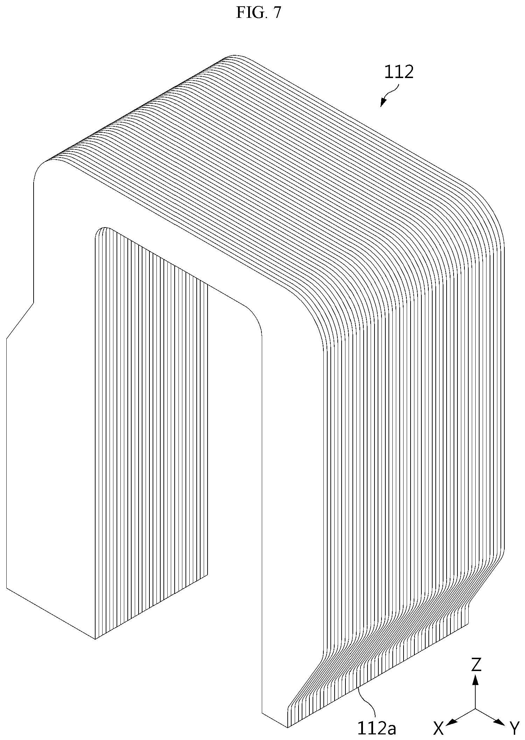

FIG. 7 is a perspective view showing an example of a main magnetic core applicable to the present disclosure.

As illustrated in FIG. 7, the main magnetic core 112 may be manufactured by stacking a plurality of first metal plates 112a having the same shape. In this case, the plurality of first metal plates 112a may be made of various materials. For example, the plurality of first metal plates 112a may each be implemented as a silicon steel plate. Additionally, an insulating layer may be interposed between the first metal plates.

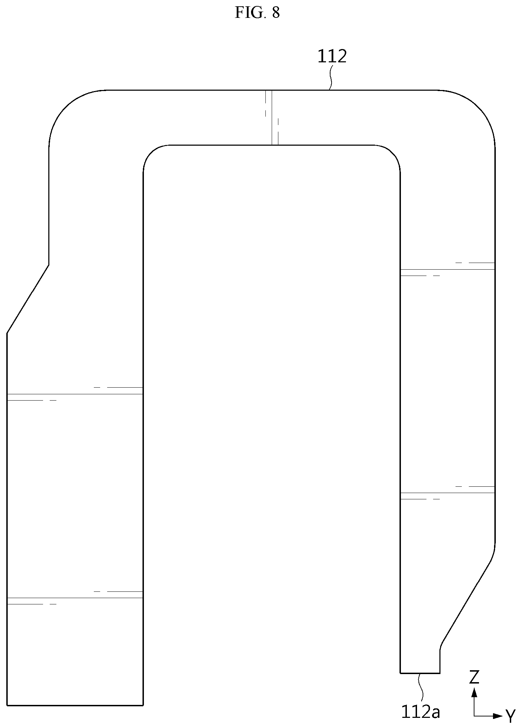

FIG. 8 is a side view of the main magnetic core 112 illustrated in FIG. 7.

As illustrated in FIG. 8, each of the first metal plates 112a forming the main magnetic core 112 may generally have an 'n' shape or a 'U' shape.

Additionally, when the main magnetic core 112 is stacked in parallel with the sub-magnetic core 114 to be described later, the height of the main magnetic core 112, that is, the length in the Z-axis direction, may be determined so that a portion of the hollow space surrounded by the main magnetic core 112 may be positioned outside the outer surface of the sub-magnetic core 114.

Additionally, as illustrated in FIGS. 5 and 6, the above-described pressure pad 130 may be coupled to one end of this main magnetic core 112. In FIG. 8, the pressure pad 130 may be coupled to the lower right end of the main magnetic core 112.

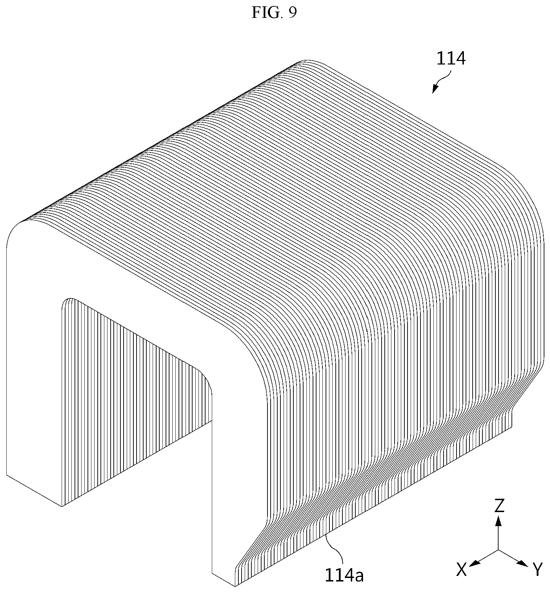

FIG. 9 is a perspective view showing an example of a sub-magnetic core applicable to the present disclosure.

As illustrated in FIG. 9, the sub-magnetic core 114 may be manufactured by stacking a plurality of second metal plates 114a having the same shape. In this case, the plurality of second metal plates 114a may be made of various materials. For example, the plurality of second metal plates 114a may each be implemented as a silicon steel plate. Additionally, an insulating layer may be interposed between the second metal plates.

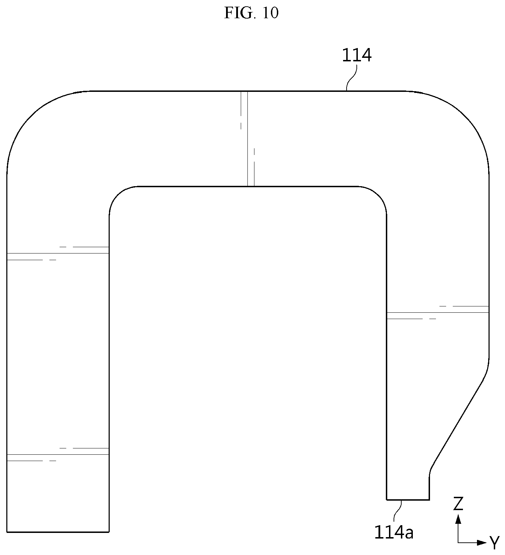

FIG. 10 is a side view of the sub-magnetic core 114 illustrated in FIG. 9.

As illustrated in FIG. 10, each of the second metal plates 114a forming the sub-magnetic core 114 may generally have an 'n' shape or a 'U' shape.

Additionally, when the sub-magnetic core 114 is stacked in parallel with the main magnetic core 112 described above, the height of the sub-magnetic core 114, that is, the length in the Z-axis direction, may be determined so that a portion of the hollow space surrounded by the main magnetic core 112 may be positioned outside the outer surface of the sub-magnetic core 114.

Additionally, as illustrated in FIGS. 5 and 6, the above-described pressure pad 130 may be coupled to one end of this sub-magnetic core 114. In FIG. 10, the pressure pad 130 may be coupled to the lower right end of the sub-magnetic core 114.

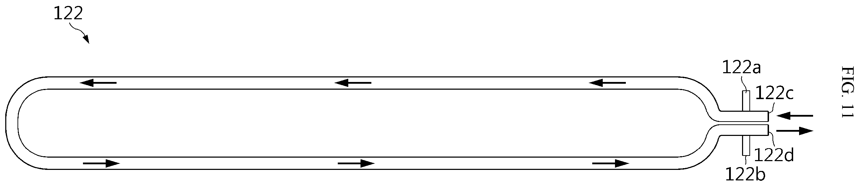

FIG. 11 is a view showing an example of a first induction coil applicable to the present disclosure.

As illustrated in FIG. 11, the first induction coil 122 may be configured to be commonly wound around the main magnetic core 112 and at least one sub-magnetic core 114.

When current flows through this first induction coil 122, a magnetic field may be generated in the main magnetic core 112 and the at least one magnetic core 110. To this end, the first induction coil 122 may include an input terminal 122a where current is input and an output terminal 122b where current is output.

In an embodiment, the first induction coil 122 may have a tubular shape with a hollow interior. Since the first induction coil 122 has a tubular shape, a cooling material may be supplied into the first induction coil 122 to efficiently cool not only the first induction coil 122 but also the magnetic cores 112, 114, which may result in extending the continuous usage time of the battery sealing apparatus 10.

In this case, the first induction coil 122 may include an inlet 122c for introducing the cooling material into the first induction coil 122 and an outlet 122d for discharging the cooling material introduced into the first induction coil 122 to the outside of the first induction coil 122.

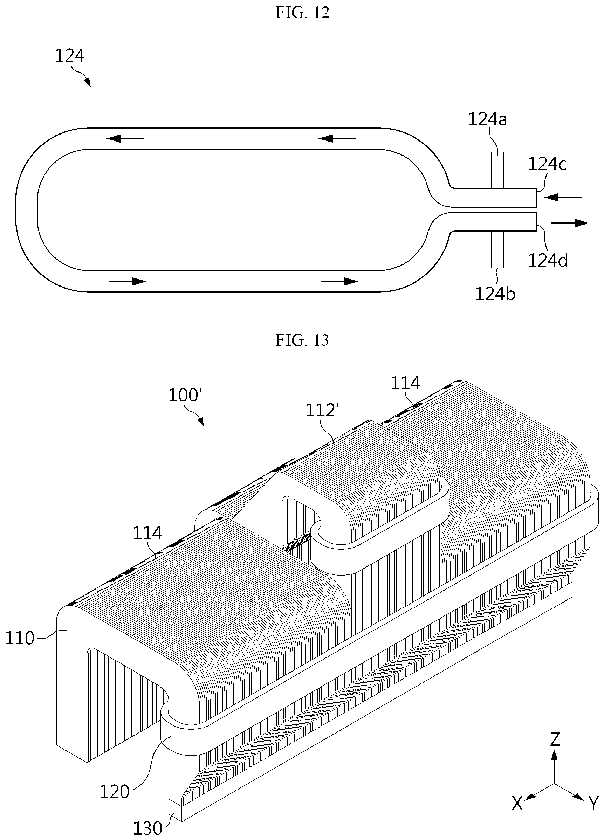

FIG. 12 is a view showing an example of a second induction coil applicable to the present disclosure.

As illustrated in FIG. 12, the second induction coil 124 may be configured to be wound only around the main magnetic core 112.

When current flows through this second induction coil 124, the magnetic field generated in the main magnetic core 112 by the first induction coil 122 may be strengthened. To this end, the second induction coil 124 may include an input terminal 124a where current is input and an output terminal 124b where current is output.

In this way, since the main magnetic core 112 generates a magnetic field using the plurality of induction coils 122, 124 wound at different positions, it may generate a magnetic field having a higher magnetic flux density than the magnetic field generated by the sub-magnetic core 114.

In an embodiment, the second induction coil 124 may have a tubular shape with a hollow interior. In this way, since the second induction coil 124 has a tubular shape, a cooling material may be supplied into the second induction coil 124 to efficiently cool not only the second induction coil 124 but also the main magnetic core 112, which may result in extending the continuous usage time of the battery sealing apparatus 10.

In this case, the second induction coil 124 may include an inlet 124c for introducing the cooling material into the second induction coil 124 and an outlet 124d for discharging the cooling material introduced into the second induction coil 124 to the outside of the second induction coil 124.

In an embodiment, since both the first induction coil 122 and the second induction coil 124 are implemented in a tubular shape, the cooling effect of the main magnetic core 112 may be enhanced, and the continuous usage time of the battery sealing apparatus 10 may be further extended.

As previously mentioned, a first alternating current may be input to the first induction coil 122 described above, and a second alternating current may be input to the second induction coil 124.

The amplitude of the second alternating current input to the second induction coil 124 may be greater than the amplitude of the first alternating current input to the first induction coil 122. Accordingly, the main magnetic core 112 where the first induction coil 122 and the second induction coil 124 are wound may easily generate a magnetic field having a higher magnetic flux density than the magnetic field generated by the sub-magnetic core 114 where only the first induction coil 122 is wound.

In an embodiment, the frequency of the second alternating current may be lower than the frequency of the first alternating current. Accordingly, while the destructive interference between the magnetic fields generated by the first induction coil 122 and the second induction coil 124 is reduced, the magnetic field generated by the main magnetic core 112 may have a greater penetration force than the magnetic field generated by the sub-magnetic core 114.

FIG. 13 is a perspective view showing an induction heating module according to a modified embodiment.

As illustrated in FIG. 13, the induction heating module 100' according to the modified embodiment may be configured identically to the induction heating module 100 described above, except for the shape of the main magnetic core 112'.

That is, the induction heating module 100' according to the modified embodiment may include a magnetic core 110, an induction coil 120, and a pressure pad 130, similar to the induction heating module 100 described above. Although not illustrated in FIG. 13, the induction heating module 100' according to the modified embodiment may, of course, further include an insulating block corresponding to the insulating block 140 described above.

The main magnetic core 112' of the induction heating module 100' according to the modified embodiment may improve the power efficiency of the battery sealing apparatus 10 by having a shape that shortens the path of the magnetic field.

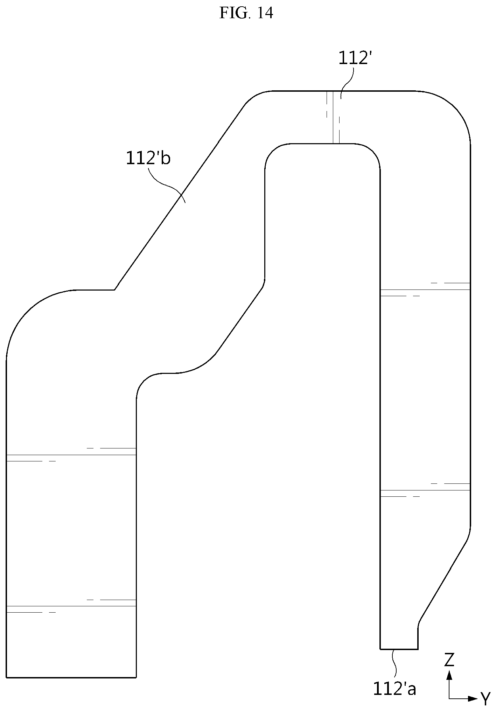

FIG. 14 is a side view showing the main magnetic core 112' of the induction heating module illustrated in FIG. 13.

As illustrated in FIG. 14, the main magnetic core 112' may be manufactured by stacking a plurality of third metal plates 112'a having the same shape. In this case, each of the third metal plates 112'a may have a modified 'n' shape or a modified 'U' shape. That is, the third metal plate 112'a, unlike the first metal plate 112a described with reference to FIG. 8, may have an inclined portion 112'b. This inclined portion 112'b may shorten the path of the magnetic field formed along the main magnetic core 112', thereby reducing the power required to generate a magnetic field having a predetermined magnetic flux density.

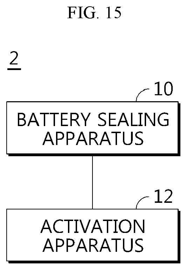

FIG. 15 is a block diagram showing a battery manufacturing system 2 according to an embodiment of the present disclosure.

As illustrated in FIG. 15, the battery manufacturing system 2 according to an embodiment of the present disclosure includes the battery sealing apparatus 10 described above. That is, the battery manufacturing system 2 is configured to seal a battery case accommodating an electrode assembly provided by stacking a positive electrode plate and a negative electrode plate with a separator therebetween, and an electrolyte material, using the battery sealing apparatus 10 according to the present disclosure.

In an embodiment, the battery manufacturing system 2 may further include an activation apparatus 12. The activation apparatus 12 may be configured to activate a battery that has been sealed by the battery sealing apparatus 10 by repeatedly charging, discharging, and recharging the battery, and performing aging.

To this end, the activation apparatus 12 may include a charger/discharger for charging and discharging a battery, a chamber for accommodating the battery, a temperature controller for controlling the temperature of the chamber, and the like.

As described above, according to the present disclosure, the battery sealing apparatus may be configured to seal by directly heating the target portion of the battery corresponding to the sealing target using the induction heating method while pressing the target portion, thereby reducing the time and power required for heating and cooling the existing sealing tool, enabling prolonged use of the battery sealing apparatus, and improving battery production rates.

Additionally, the elastic pressure pad is disposed between the magnetic core generating the magnetic field and the target portion of the battery to press the target portion, and thus, even if the target portion of the battery has a step or bend, or the corresponding battery is not set accurately in the designated position, the entire target portion may be appropriately pressed to prevent sealing defects, which may result in improving the yield of the battery and ensuring the performance and safety of the battery.

Additionally, the magnetic core generating the magnetic field may include a main magnetic core configured to generate a magnetic field with a relatively high magnetic flux density and at least one sub-magnetic core configured to generate a magnetic field with a relatively low magnetic flux density, thereby enabling uniform sealing even if the target portion of the battery includes relatively thick and relatively thin parts, and further improving the sealing quality of the battery.

Additionally, since the induction coil wound around the magnetic core has a tubular shape with a hollow interior, a cooling material may be supplied into the induction coil to efficiently cool the induction coil and the magnetic core, which may result in further extending the continuous usage time of the battery sealing apparatus.

Additionally, since the pressure pad is made of a material including silicone with insulating properties, heat loss occurring at the target portion may be prevented, and the power required for the sealing process may be reduced.

Furthermore, it is obvious that embodiments according to the present disclosure may solve various other technical problems in addition to those mentioned in this specification in related technical field as well as in the relevant technical field.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### [Explanation of Reference Signs]

2: Battery manufacturing system
10: Battery sealing apparatus
100: Magnetic core
112, 112': Main magnetic core
114: Sub-magnetic core
120: Induction coil
122: First induction coil
124: Second induction coil
130: Pressure pad
140: Insulating block

## Claims

1. A battery sealing apparatus configured to seal a target portion of a battery corresponding to a sealing target using an induction heating method while pressing the target portion, the battery sealing apparatus comprising:
a magnetic core configured to generate a closed-loop magnetic field penetrating the target portion;
an induction coil wound around the magnetic core; and
a pressure pad having elasticity, disposed between the magnetic core and the target portion, and configured to press the target portion.

2. The battery sealing apparatus according to claim 1,
wherein the magnetic core comprises:
a main magnetic core configured to generate a first magnetic field having a predetermined magnetic flux density; and
at least one sub-magnetic core disposed adjacent to the main magnetic core and configured to generate a second magnetic field having a lower magnetic flux density than the first magnetic field.

3. The battery sealing apparatus according to claim 2,
wherein the main magnetic core comprises a plurality of first metal plates stacked in parallel with each other,
wherein the at least one sub-magnetic core comprises a plurality of second metal plates stacked in parallel with each other, and
wherein the thickness of each of the plurality of first metal plates is configured to be thinner than the thickness of each of the plurality of second metal plates.

4. The battery sealing apparatus according to claim 2,
wherein the target portion comprises a first portion having a relatively long magnetic field penetration distance and a second portion having a relatively short magnetic field penetration distance,
wherein the main magnetic core is disposed at a position corresponding to the first portion, and
wherein the at least one sub-magnetic core is disposed at a position corresponding to the second portion.

5. The battery sealing apparatus according to claim 2,
wherein the main magnetic core and the at least one sub-magnetic core each have a partially disconnected loop shape, and
wherein the main magnetic core is configured to protrude further in a predetermined direction than the at least one sub-magnetic core.

6. The battery sealing apparatus according to claim 2,
wherein the induction coil comprises:
a first induction coil commonly wound around the main magnetic core and the at least one sub-magnetic core; and
a second induction coil wound only around the main magnetic core.

7. The battery sealing apparatus according to claim 6,
wherein the amplitude of a second alternating current flowing through the second induction coil is greater than the amplitude of a first alternating current flowing through the first induction coil.

8. The battery sealing apparatus according to claim 7,
wherein the frequency of the second alternating current is lower than the frequency of the first alternating current.

9. The battery sealing apparatus according to claim 1,
wherein the induction coil has a tubular shape with a hollow interior.

10. The battery sealing apparatus according to claim 9,
wherein the induction coil comprises:
an inlet for introducing a cooling material into the induction coil; and
an outlet for discharging the cooling material introduced into the induction coil to the outside of the induction coil.

11. The battery sealing apparatus according to claim 1, further comprising:
an insulating block having insulating properties and surrounding the exterior of the magnetic core and the induction coil.

12. The battery sealing apparatus according to claim 11,
wherein the pressure pad is disposed on the outer surface of the insulating block.

13. The battery sealing apparatus according to claim 1,
wherein the pressure pad is made of a material comprising silicone.

14. A battery manufacturing system comprising a battery sealing apparatus according to any one of claims 1 to 13.
